# EUROPEAN PATENT APPLICATION

(11) **EP 1 143 351 A2**
(43) Date of publication of application: **10.10.2001**
(21) Application number: 01105311.3
(22) Date of filing: 07.03.2001
(51) Int. Cl.: G06F 17/30

(54) **Multimedia information structuring and application generating method and apparatus**

(30) Priority: 15.03.2000 JP 2000072685
(71) Applicant: Ricoh Company, Ltd., Tokyo 143-8555 (JP)
(72) Inventor: Day, Neil, Ohta-ku, Tokyo 143-8555 (JP)
(74) Representative: Schwabe - Sandmair - Marx

(57) **Abstract**

An application generating method includes steps of a) acquiring multimedia information that includes at least two of video data, audio data, image data and text data and that is described with a language for structuring information, b) acquiring a style sheet that includes a definition relating to a data display format of the multimedia information and a definition relating to data processing of the multimedia information, and c) generating an application of manipulating data of the multimedia information by processing the multimedia information with the style sheet.

## Description

The present invention relates to a method, an apparatus and a computer program product for structuring multimedia information and generating an application of the multimedia information.

In recent years, quantity of audio/visual information used in the Internet has increased with accelerated velocity, and demand for technology for efficiently managing and processing audio/visual information has increased more than ever. For efficiently managing and processing audio/visual information, the audio/visual information needs to be expressed in a proper manner so that the information can be referenced, retrieved or processed accurately and promptly.

MPEG-7 is known as a method of expressing audio/image information. In a process of standardization of MPEG-7, one object was to enable describing the meaning of data by marking the data with a tag. DDL (Description Definition Language) of MPEG-7 is a description language that realizes description of the meaning of data of audio/image information in such a way.

HTML (Hyper Text Markup Language) is also known as a representative language in which data is marked by a tag. However, HTML does not have a capability of expressing audio/image information in a descriptive manner.

XML (Extensible Markup Language) promoted by W3C (World Wide Web Consortium) has its object to enable SGML (Standard Generalized Markup Language) to be used in the Internet as HTML is used, and greatly differs from HTML in that the user can define a tag. That is, in XML, by enclosing both ends of information with a tag defining a specific meaning in a document, the information is correlated to the specific meaning.

XML is a powerful language applicable to audio/image information also. DDL of MPEG-7 and XML are almost identical except that DDL provides a more plentiful variety of expanding sets.

DDL and XML are languages that structure information. When displaying a structured document described with DDL or XML in a screen, for defining a style of displaying the document in the screen, a style sheet describing a display setting can be used. DSSSL (Document Style Semantics and Specification Language) of ISO standard 10179 and XSL (Extensible Style-sheet Language) of W3C are known as examples of the style sheet.

When displaying a document described with XML in a style set by XSL, description of information contents and display setting for the description of information contents are provided in separate files. That is, two kinds of files, an XML description file describing information contents with XML and attaching a tag to the information contents to describe the meaning of content of the information contents and a XSL file defining a display rule, are provided. Thereby, without changing the XML file including information contents itself, the XSL file defining a display rule can be overwritten.

Conventionally, a style sheet as represented by XSL has been related only to a display layout for text data. However, for expressing audio/image information with DDL or XML so that the information can be efficiently managed and processed, it is desired that the concept of a style sheet is extended so that the style sheet can be also applied to audio/image information.

### SUMMARY OF THE INVENTION

The present invention has been made in view of the above-discussed and other problems and addresses the above-discussed and other problems.

According to a preferred embodiment of the present invention, an application generating method includes steps of a) acquiring multimedia information that includes at least two of video data, audio data, image data and text data and that is described with a language for structuring information, b) acquiring a style sheet that includes a definition relating to a data display format of the multimedia information and a definition relating to data processing of the multimedia information, and c) generating an application of manipulating data of the multimedia information by processing the multimedia information with the style sheet.

Thus, in the present invention, an application of manipulating data of multimedia information is generated according to a style sheet that includes a definition relating to a display format for data of the multimedia information and a definition relating to processing of data of the multimedia information. Accordingly, contents of the multimedia information, and processing and a displaying format of the multimedia information can be separately managed from each other, such that even if it necessary to change the application, the change can be realized simply by changing the style sheet that defines processing and a displaying format for the multimedia information as necessary without changing a file containing the contents of the multimedia information. By thus expanding the concept of a style sheet to displaying and processing of multimedia information, efficient generation of an application of multimedia information is realized, and thereby efficient management and processing of multimedia information can be realized.

In the above-described method, the steps of a), b) and c) may generate a plurality of applications of manipulating data of multimedia information for a plurality of combinations of multimedia information and style sheets. In this case, the method further includes receiving a user request, and selecting an application according with the user request among from the plurality of applications.

By thus processing multiple combinations of multimedia information and style sheets in advance, a user request can be quickly responded.

The above-described method may alternatively include receiving a user request, and in the steps of a) and b), multimedia information and a style sheet according with the user request may be respectively acquired.

Thus, in the present invention, multimedia information and a style sheet can be acquired one by one according to a user request, such that the multimedia information and the style sheet can be managed while maintaining separation of the multimedia information and the style sheet and that thereby efficient management and processing of the multimedia information can be realized

Further, in the above-described method, the step of b) may include searching for a style sheet according with a user request, and generating a new style sheet when the style sheet according with the user request is not found.

Therefore, in the present invention, when a style sheet is not found in response to a user request, a new style sheet is generated, such that accumulation of style sheets is realized and that thereby plentiful applications can be accumulated.

Furthermore, the above-described method may include displaying the application in a browser used by a user, and executing the data processing defined by the style sheet in accordance with an operation by the user relative to the application.

Therefore, in the present invention, an application generated according to a style sheet can be provided to a user so as to be immediately executed by the user.

According to another preferred embodiment of the present invention, an application generating apparatus includes a multimedia information acquiring mechanism configured to acquire multimedia information that includes at least two of video data, audio data, image data and text data and that is described with a language for structuring information, a style sheet acquiring mechanism configured to acquire a style sheet that includes a definition relating to a data display format of the multimedia information and a definition relating to data processing of the multimedia information, and an application generating mechanism configured to generate an application of manipulating data of the multimedia information by processing the multimedia information with the style sheet.

In the above-described apparatus, the multimedia information acquiring mechanism, the style sheet acquiring mechanism and the application generating mechanism may be configured so as to generate a plurality of applications of manipulating data of multimedia information for a plurality of combinations of multimedia information and style sheets. In this case, the apparatus further includes a user request receiving mechanism configured to receive a user request, and an application selection mechanism configured to select an application according with the user request among from the plurality of applications.

The above-described apparatus may alternatively be configured so as to include a user request receiving mechanism configured to receive a user request and such that the multimedia information acquiring mechanism and the style sheet acquiring mechanism acquire multimedia information and a style sheet according with the user request.

Further, in the above-described apparatus, the style sheet acquiring mechanism may include a style sheet searching mechanism configured to search for a style sheet according with a user request, and a new style sheet generating mechanism configured to generate a new style sheet when the style sheet according with the user request is not found.

The above-described apparatus may further include a displaying mechanism configured to display the application in a browser used by a user, and a data processing executing mechanism configured to execute the data processing defined by the style sheet in accordance with an operation by the user relative to the application.

According to another preferred embodiment of the present invention, a system includes a server configured to acquire multimedia information that includes at least two of video data, audio data, image data and text data and that is described with a language for structuring information and a style sheet that includes a definition relating to a data display format of the multimedia information and a definition relating to data processing of the multimedia information, and a client configured to send a request to the server and to display an application of manipulating data of the multimedia information received from the server in accordance with data received from the server in response to the request. The application is generated by processing the multimedia information with the style sheet.

In the above-described system, the server may generate the application by processing the multimedia information with the style sheet, and send the application to the client.

Alternatively, the above-described system may be configured such that the client receives the multimedia information from the server and the style sheet and then processes the multimedia information with the style sheet.

Further, the above-described system may be configured such that the server receives the multimedia information from a remote server.

According to another preferred embodiment of the present invention, an information structuring method includes recording a style sheet for multimedia information including at least two of video data, audio data, image data and text data and described with a language for structuring information. The style sheet includes a definition relating to a data display format of the multimedia information and a definition relating to data processing of the multimedia information.

According to another preferred embodiment of the present invention, an information structuring apparatus includes a unit configured to record a style sheet for multimedia information including at least two of video data, audio data, image data and text data and described with a language for structuring information. The style sheet includes a definition relating to a data display format of the multimedia information and a definition relating to data processing of the multimedia information.

According to another preferred embodiment of the present invention, a machine readable recording medium or computer program product records therein a program for controlling a computer to execute steps of acquiring multimedia information that includes at least two of video data, audio data, image data and text data and that is described with a language for structuring information, acquiring a style sheet that includes a definition relating to a data display format of the multimedia information and a definition relating to data processing of the multimedia information, and generating an application of manipulating data of the multimedia information by processing the multimedia information with the style sheet.

According to another preferred embodiment of the present invention, a machine readable recording medium or computer program product records therein a style sheet that controls a computer to generate an application by executing steps of setting a data display format of multimedia information including at least two of video data, audio data, image data and text data and described with a language for structuring information, and setting data processing of the multimedia information.

A more complete appreciation of the present invention and many of the attendant advantages thereof will be readily obtained by reference to the following detailed description of exemplary embodiments when considered in conjunction with the accompanying drawings, wherein:
Fig. 1 is a diagram illustrating a client/server system using an audio/visual style sheet according to the present invention;
Fig. 2 is a diagram for explaining an operation of providing an audio/visual contents description application by processing an audio/visual contents description document and an audio/visual style sheet;
Fig. 3 is a flowchart illustrating an operation of the client server system of Fig. 1;
Fig. 4 is a diagram for explaining another operation of the client server system of Fig. 1;
Fig. 5 is a diagram illustrating an example of generating an audio/visual contents description application by a combination of an audio/visual contents description document and an audio/visual style sheet;
Fig. 6 is a diagram illustrating another example of generating an audio/visual contents description application by a combination of an audio/visual contents description document and an audio/visual style sheet;
Fig. 7 is a diagram illustrating an example of an audio/visual contents description application generated by a combination of an audio/visual contents description document and an audio/visual style sheet according to the present invention;
Fig. 8 is a diagram illustrating another example of generating an audio/visual contents description application by a combination of an audio/visual contents description document and an audio/visual style sheet, in particular illustrating an image retrieval application capable of performing an image retrieval operation illustrated in Fig. 7;
Fig. 9 is a diagram for explaining an operation of setting a title by manipulating a search options button;
Fig. 10 is a diagram illustrating concrete examples of an audio/visual contents description document and an audio/visual style sheet;
Fig. 11 is a flowchart illustrating another example of an operation of the client server system according to the present invention; and
Fig. 12 is a diagram illustrating a construction of an apparatus that executes a process of generating an audio/visual contents description application according to the present invention.

Referring now to the drawings, wherein like reference numerals designate identical or corresponding parts throughout the several views, preferred embodiments of the present invention are described.

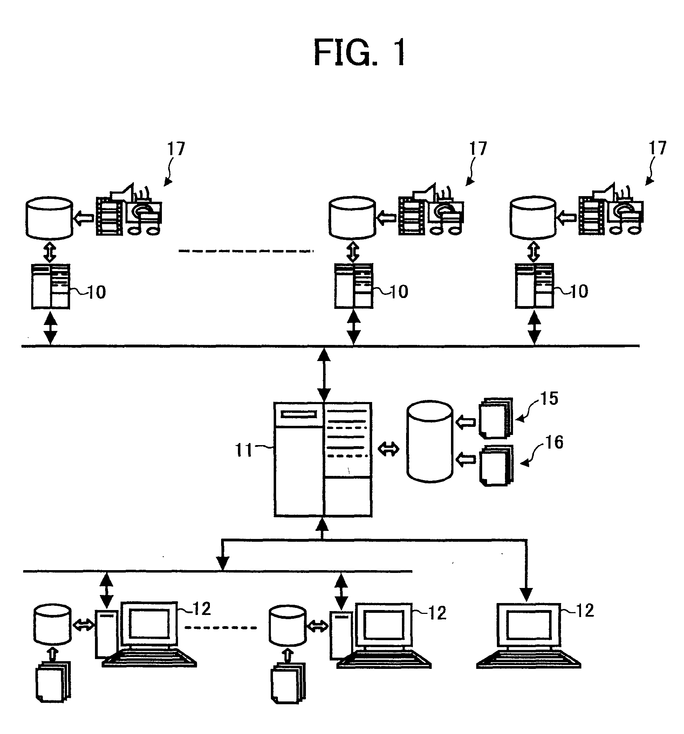

Fig. 1 a diagram illustrating a client/server system using an audio/visual style sheet according to the present invention.

The client server system includes a server 10, a web server 11, and a client 12. The server 10 stores audio/visual contents data 17. The term "audio/visual" data as used for the purpose of this application may be understood as a synonym for all kinds of multimedia information and refers in particular to any type of data pertaining to, involving or directed at hearing, sight or both hearing and sight. Accordingly, the audio/visual contents data 17 may be stored e.g. as raw video, audio or image data or as an audio/visual contents description document or data file described with XML, HTML (or any other suitable markup language). That is, the audio/visual contents data 17 can be information contents itself. Audio/visual contents or information as used in this document includes not only still image data but also video image or movie image data.

The web server 11 receives a request from the client 12 so as to communicate with the server 10. In this configuration, the client 12 does not have to communicate directly with the server 10, so that useless time to wait for a response from the server 10 is avoided. The web server 11 receives from the server 10 data requested by a user and stores the data. Once the data is stored by the web server 11, a subsequent user request is executed to the data stored by the web server 11. The present invention does not require that the server 10 and the web server 11 are separately provided as described above; instead functions of the server 10 and the web server 11 could be realized by means of a single server unit.

When data received from the server 10 is processed, the web server 11 sends the processed data to the client 12. The received data is, for example, displayed by a browser of the user. If the user issues additional requests in a dialoguing manner, the requests are either executed locally by the client 12 or by the web server 11.

The web server 11 stores an audio/visual contents description document 15 and an audio/visual style sheet 16. An audio/visual contents description document 15 includes information contents, data expressing constructional characteristics of the information contents and descriptive information relating to data set by the creator of the information contents or the user. An audio/visual style sheet 16 is, for example, a template that defines a process and operation executed when the user issues a specific request.

For example, when retrieving data using an image as a retrieving key, the web server 11 checks, upon receiving a request from a user, whether an audio/visual style sheet 16 as a template for use in an image retrieving application exists in its own memory. If the audio/visual style sheet 16 exists, the web server 11 processes and operates an audio/visual contents description document 15 received from the server 10, in accordance with a definition of the audio/visual style sheet 16. The audio/visual contents description document 15 and the audio/visual style sheet 16 are stored in a memory or a cache memory of the web server 11.

The client 12 stores in its own memory tools and applications that can be used in conjunction with an audio/visual contents description application. The tools and applications are described with such languages as C, C + +, Java etc., and are called via the audio/visual contents description application displayed on a display of the client 12.

When a user sends a request for data retrieval using an image as a retrieving key, the web server 11 processes in response to the request an appropriate audio/visual contents description document 15 and an appropriate audio/visual style sheet 16, and sends processed data (i.e., the audio/visual contents description document 15 and the audio/visual style sheet 16) to a browser of the client 12. The browser uses an interface of a window system of the client 12 for displaying the received data on a display. The displayed data can be manipulated using the tools provided in the client 12. The audio/visual contents description application has a link to the tools to call an appropriate one of them according to the user's manipulation of buttons.

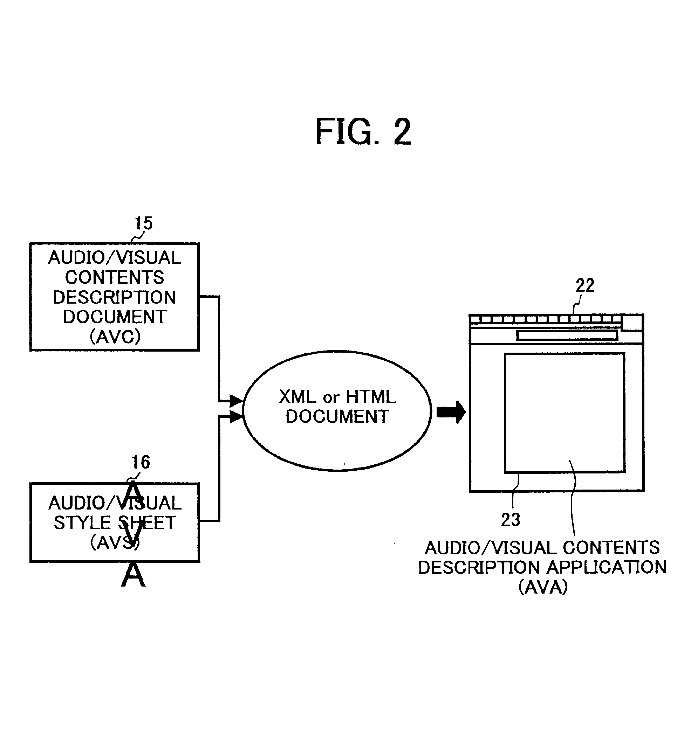

Fig. 2 is a diagram for explaining an operation of providing an audio/visual contents description application by processing an audio/visual contents description document (AVC) 15 and an audio/visual style sheet (AVS) 16.

As illustrated in Fig. 2, the audio/visual contents description document (AVC) 15 is information for processing and the audio/visual style sheet (AVS) 16 is information defining a display setting and a processing content for the information for processing. The web server 11 generates a XML or HTML document by processing the audio/visual style description document 15 with the audio/visual style sheet 16 and sends the generated document to a browser 22 of the client 12. The browser 22 displays the received document and provides an audio/visual contents description application 23 to the user.

More specifically, the audio/visual contents description document 15 includes metadata for explaining audio/visual contents (e.g., the title, the author etc. of the audio/visual contents) and a structural description describing a structural aspect of the audio/visual contents. In this example, the audio/visual contents description document 15 includes video information. For example, scene information describing a goal scene in a soccer match can be structured as an audio/visual contents describing document 15. The audio/visual style sheet 16 includes a design layout for displaying in a browser information of the audio/visual contents description document 15 with an audio/visual contents description application and a definition of processing contents for the information for processing, i.e., the information of the audio/visual contents description document 15. For example, when the audio/visual contents description application 23 is an image retrieving application, a retrieval button linked to a tool for performing retrieval of an image data base is provided in the audio/visual contents description application 23. The tool may be one that performs, for example, checking of edges of an image in an image retrieval operation and is a program code read out from a server or a client computer to be executed.

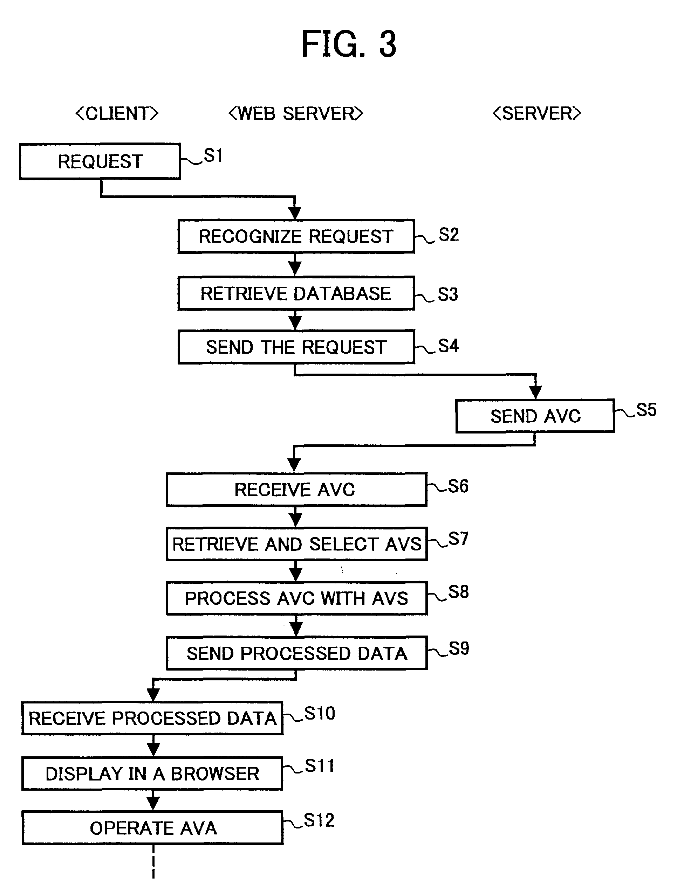

Fig. 3 is a flowchart illustrating an operation of the client server system of Fig. 1.

In step S1, a user issues a request from the client 12. For example, the user issues a request for retrieving data using an image as a retrieval key.

In step S2, the web server 11 receives the request and analyzes contents of the request so as to recognize the contents of the request. For example, the web server 11 recognizes the contents of the request as a data retrieval request using an image as a retrieval key.

In step S3, the web server 11 searches for a data base or data record in accordance with the contents of the request. For example, when a retrieval subject is an image of a marine animal, the web server 11 searches the server 10 connected with the web server 11 for an image data base of marine animals.

In step S4, the web server 11 sends the request to the data base found in step S3.

In step S5, the server 10, upon receiving the request from the web server 11, sends a corresponding audio/visual contents description document (AVC) 15 to the web server 11, for example, a visual contents description document of the marine animals data base.

In step S6, the web server 11 receives the requested audio/visual contents description document (AVC) 15.

In step S7, the web server 11 searches for an audio/visual style sheet (AVS) 16 in accordance with the contents of the request and selects an appropriate audio/visual style sheet (AVS) 16. For example, when the contents of the request is to retrieve data using a sketch image as a retrieval key, the web server 11 searches for an audio/ visual style sheet (AVS) 16 that generates an image retrieval application in accordance with the contents of the request within a memory of the web server 11, so as to select an appropriate audio/visual style sheet (AVS) 16.

In step S8, the web server 11 processes the audio/visual contents description document (AVC) 15 with the selected audio/visual style sheet (AVS) 16. A result of the processing is obtained for example in the form of an XML or HTML document.

In step S9, the web server 11 sends the processed data, e.g. an XML or HTML document, to the client 12.

In step S10, the client receives the processed data from the web server 11.

In step S11, the client displays the received data in a browser so as to provide to the user an audio/visual contents description application 23 (AVA).

In step S12, the user manipulates the audio/visual contents description application (AVA) 23 displayed in the browser. Thus, the operation of acquiring a desired audio/visual contents description application (AVA) by sending a request ends.

In the above-described operation, the web server 11 is configured so as to retrieve an audio/visual contents description document and an audio/visual style sheet when a request is received from a user, in accordance to contents of the request from the user, and to perform a processing to a combination of the audio/visual contents description document and the audio/visual style sheet which have been obtained. Here, alternatively, the web server 11 can be configured such that all possible combinations of audio/visual contents description documents and audio/visual style sheets are processed and that processed data is stored in the web server 11 in advance.

Further, the present invention does not require the server 10 and the web server 11 to be separate as illustrated in Fig. 3. Functions of the server 10 and the web server 11 may be instead realized by a single server apparatus.

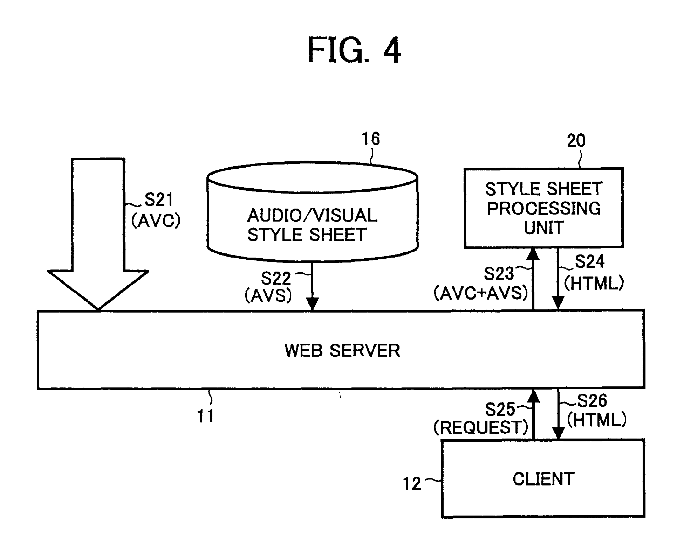

Fig. 4 is a diagram for explaining another operation of the client server system of Fig. 1. Referring to Fig. 4, a construction and an operation to process in advance all possible combinations of audio/visual contents description documents and audio/visual style sheets are described.

In step S21, the web server 11 accesses and acquires an audio/visual contents description document 15 (AVC) of the server 10. In step S22, the web server 11 acquires an audio/visual style sheet (AVS) 16 applicable to the audio/visual contents description document (AVC) 15 acquired in step S21. In step S23, the web server 11 sends the audio/visual contents description document (AVC) 15 and the audio/visual style sheet (AVS) 16 to a style sheet processing unit 20. In step S24, the style sheet processing unit 20 processes the received audio/visual contents description document (AVC) 15 and the audio/visual sheet (AVS) 16, so as to output an HTML document. The output document can be described in any other suitable format than the HTML format.

The above-described processing is executed for all possible combinations of the audio/visual contents description document (AVC) 15 and the audio/visual style sheet (AVS) 16, so that corresponding HTML documents are stored in the web server 11.

In step S25, the client 12 requests to the web server 11 an audio/visual contents description application such as an image retrieval application. Upon recognizing that the request is for an image retrieval application, the web server 11 retrieves a corresponding HTML document.

In step S26, the web server 11 sends the retrieved HTML document to the client 12. The client 12 displays the received HTML document by means of a browser so as to provide an audio/visual contents description application to the user.

By thus processing every possible combinations of the audio/visual contents description document 15 and the audio/visual style sheet 16 in advance, the response speed for requests from the client 12 to the web server 11 can be enhanced.

In Figs. 3 and 4, the audio/visual contents description document (AVC) 15 is processed in accordance with the audio/visual style sheet (AVS) 16 at the web server 11. However, in the client server system configured as illustrated in Fig. 1, the audio/visual contents description document (AVC) 15 and the audio/visual style sheet (AVS) 16 can also be sent to the client 12 without being processed at the web server 11, so that the audio/visual contents description document (AVC) 15 is processed in accordance with the audio/visual style sheet (AVS) 16 at the client 15.

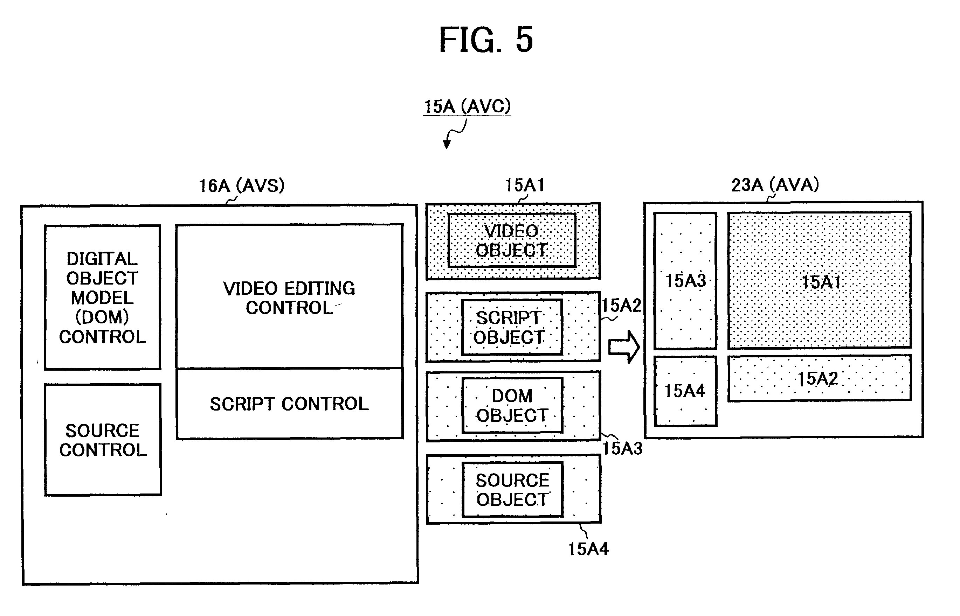

Fig. 5 is diagram illustrating an example of generating an audio/visual contents description application by a combination of an audio/visual contents description document and an audio/visual style sheet.

Fig. 5 illustrates an example of a video editing application. In Fig. 5, an audio/visual style sheet (AVS) 16A defines each display layout in a browser or selection of a digital object model control, a video editing control, a source control and a script control, and each processing of the controls as well. An audio/visual contents description document (AVC) 15A includes a video object 15A1, a script object 15A2, a digital object model object 15A3, and a source object 15A4. In an audio/visual contents description application (AVA) 23A, the audio/visual contents description document components 15A1-15A4 are respectively displayed in accordance with a layout defined by the audio/visual style sheet (AVS) 16A. When a user manipulates the audio/visual contents description application (AVA) 23A, e.g. by clicking a mouse, a process defined by the audio/visual style sheet (AVS) 16A is executed.

As illustrated in Fig. 5, the audio/visual style sheet (AVS) 16A is provided as a separate data file separate from the audio/visual contents description document (AVC) 15A. Accordingly, when the contents of an application are to be changed in accordance with a situation, the contents can be changed simply by changing the audio/visual style sheet (AVS) 16A without changing the audio/visual contents description document (AVC) 15A. Thereby, productivity in changing contents of an application is increased.

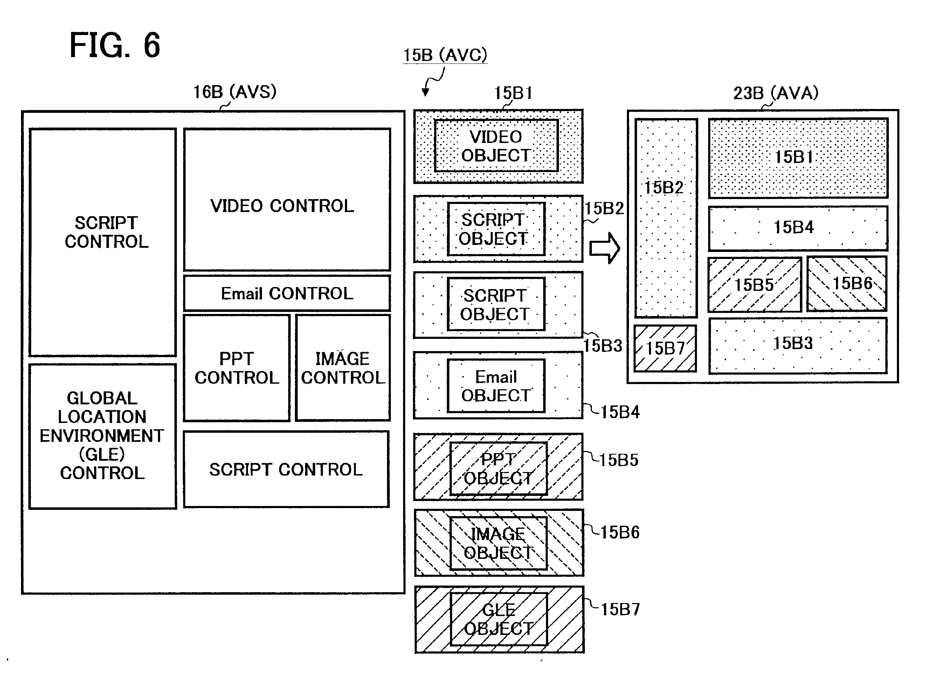

Fig. 6 is a diagram illustrating another example of generating an audio/visual contents description application by a combination of an audio/visual contents description document and an audio/visual style sheet.

Fig. 6 illustrates an example of an office document retrieval application. An audio/visual style sheet (AVS) 16B defines each display layout in a browser or selection of a script control, a global location environment (GLE) control, a video control, an e-mail control, a PPT control, an image control, and an additional script control, and each processing of the controls as well. The audio/visual contents description document (AVC) 15B includes a video object 15B1, a script object 15B2, another script object 15B3, an e-mail object 15B4, a PPT object 15B5, an image object 15B6, and a GLE object 15B7. In an audio/visual contents description application (AVA) 23, the audio/visual contents description document (AVC) components 15B1-15B7 are respectively displayed in accordance with a layout defined by the audio/visual style sheet (AVS) 16B. When the user manipulates the audio/visual contents description application (AVA) 23B, for example by clicking a mouse, a process defined by the audio/visual style sheet (AVS) 16B is executed.

Now, a method for generating an application by using of an audio/visual style sheet is described using a concrete example.

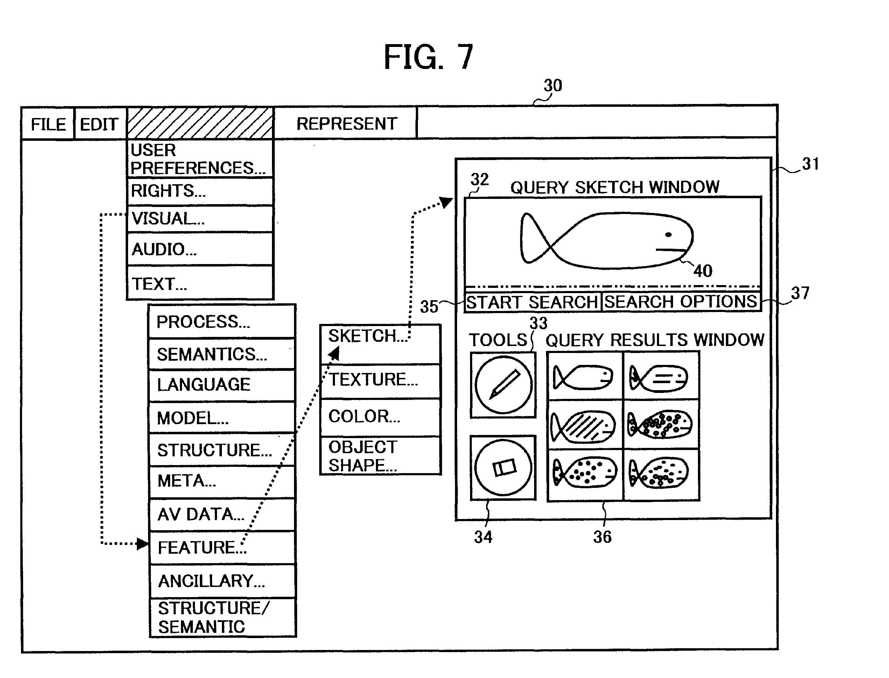

Fig. 7 is a diagram illustrating an example of an audio/visual contents description application generated by a combination of an audio/visual contents description document and an audio/visual style sheet, according to the present invention.

Fig. 7 illustrates an application user interface 30. The user can obtain a desired application by selecting an audio/visual contents description document and an audio/visual style sheet that are suited to the needs of the user by manipulation of the application interface 30.

As an example for such a manipulation, the user may open a query sketch window 31 by sequentially selecting options from menu bars of the application interface 30. In the query sketch window 31 there is provided a sketch window 32, a drawing button 33, an eraser button 34, a start search button 35, a query results display window 36 and a search options button 37.

The user draws a sketch image 40 in the sketch window 32 by using drawing tools, which are activated when the drawing button 33 is clicked. For erasing a drawn image as necessary, the eraser button 34 is provided. By clicking the eraser button 34, erasing tools are activated. After completing drawing of the sketch image 40, by clicking the start search button 35, the user can initiate a search for an image similar to the sketch image 40 over a network. When a similar image is found, this image is displayed in the query result display window 36.

A process of generating an image retrieval application capable of operating as described above by using an audio/visual contents description document and an audio/visual style sheet is next described.

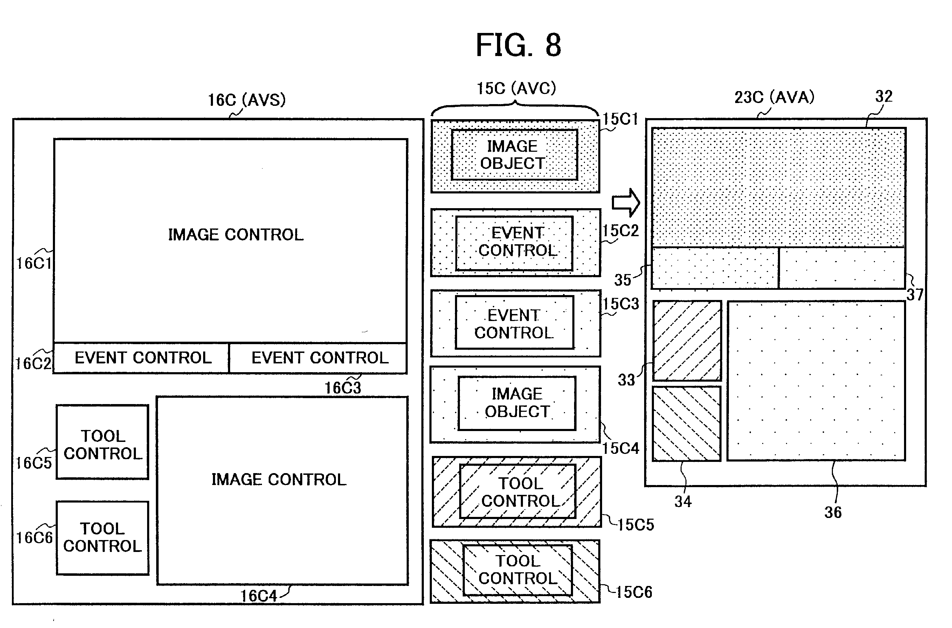

Fig. 8 is a diagram illustrating another example of generating an audio/visual contents description application by a combination of an audio/visual contents description document and an audio/visual style sheet, and illustrates an image retrieval application capable of performing an image retrieval operation as illustrated in Fig. 7.

An audio/visual contents description application (AVA) 23C corresponds to the sketch query window 31. The audio/visual contents description application (AVA) 23C is generated by processing an audio/visual description document (AVC) 15C with an audio/visual style sheet (AVS) 16C.

In the audio/visual contents description application (AVA) 23C of Fig. 8, the sketch window 32 corresponds to an image object 15C1 of the audio/visual contents description document (AVC) 15C and an image control 16C1 of the audio/visual style sheet (AVS) 16C. The drawing button 33 corresponds to a tool control 15C5 of the audio/visual contents description document (AVC) 15C and a tool control 16C5 of the audio/visual style sheet (AVS) 16C. The eraser button 34 corresponds to another tool control 15C6 of the audio/visual contents description document (AVC) 15C and another tool control 16C6 of the audio/visual style sheet (AVS) 16C. The search start button 35 corresponds to an event control 15C2 of the audio/visual contents description document (AVC) 15C and an event control 16C2 of the audio/visual style sheet (AVS) 16C. The query result display window 36 corresponds to an image object 15C4 of the audio/visual contents description document (AVC) 15C and an image control 16C4 of the audio/visual style sheet (AVS) 16C. The search options button 37 corresponds to another event control 15C3 of the audio/visual contents description document (AVS) 15C and another event control 16C3 of the audio/visual style sheet (AVS) 16C.

The image control 16C1 of the audio/visual style sheet (AVS) 16C defines the window 32 where a sketch image used for retrieval is displayed. The image control 16C4 of the audio/visual style sheet (AVS) 16C defines the query results window 36 where an image obtained as a result of the retrieval is displayed.

The event control 16C2 of the audio/visual style sheet (AVS) 16C defines an event button. The event button is linked to image characteristics provided in the standards such as MPEG-7 etc. by the audio/visual style sheet (AVS) 16. The image characteristics defined by MPEG-7 includes for example an edge characteristics. Generally, description data of an image characteristics includes metadata relating to information on the title, the author or the type of an image etc., and numerical data describing structural aspects of the image, such as an edge or a color histogram etc. of the image.

Before sending the audio/visual style sheet (AVS) 16C and the audio/visual contents description document (AVC) 15C to a client, the web server 11 (Fig. 1) checks if visual descriptors, such as edge, color, and texture descriptors, are included in the audio/visual contents description document (AVC) 15C. If any of these visual descriptors exists in the audio/visual contents description document (AVC) 15C, the web server 11 relates the visual descriptor to a corresponding button displayed on a display by an audio/visual contents description application 23C (AVA).

In the example illustrated in Fig. 8, an edge descriptor is related to the start search button 35. When the start search button 35 is depressed, the edge descriptor of the sketch image 40 (Fig. 7) is compared with the edge descriptor of an image included in the audio/visual contents description document (AVC) 15C.

MPEG-7 describes physical and logical characteristics of audio/visual contents with a scheme called a Description Scheme (DS). A Segment DS, one kind of the Description Scheme, expresses a part of audio/visual contents. The Segment DS is classified into an AudioSegment DS for describing an audio information segment of audio/visual contents, a StillRegion DS for describing a still picture segment of visual contents, a MovingRegion DS for describing a moving picture segment of visual contents, and a VideoSegment DS for describing a set of video sequence frames. The StillRegion DS is suitable for image retrieval as illustrated in Fig. 7. To the StillRegion DS, three descriptors can be related, namely a Homogeneous Texture Descriptor describing a structural characteristics of an image, such as direction, coarseness, and regularity of a pattern, a Texture Browsing Descriptor describing a texture characteristics, and an Edge Histogram Descriptor describing a spatial distribution of four directional edges and one non-directional edge of an image.

Accordingly, when MPEG-7 is a linking object, the audio/visual style sheet 16C relates the above-described Edge Histogram Descriptor defined by MPEG-7 to the start search button 35 and defines each step necessary for comparing the Edge Histogram Descriptor between images so as to be related to the start search button 35. Thereby, in response to a button operation on the start search button 35, a process of comparing an edge descriptor of a sketch image as a retrieval key and an edge descriptor included in an audio/visual contents description document (AVC) 15C can be started, so that an image retrieval is executed. When an image data base does not comprise audio/visual contents description documents that are described with an KML or XML language including an edge descriptor calculated in advance, it is necessary to perform calculation of an Edge Histogram Description for each of the audio/visual contents description documents one by one during a retrieval process.

The event control 16C3 of the audio/visual style sheet (AVS) 16C defines an event button in which retrieval options can be set. For example, when a user desires to retrieve a marine animal similar to a manually drawn sketch image, the user can set an appropriate retrieval condition by using the event button. When the sketch image is a sketch of a whale, by designating the title of an image as a marine animal or whale, retrieval is performed by combining retrieval according to visual characteristics of the sketch image (e.g., retrieval according to an edge characteristics) and retrieval by metadata (e.g., retrieval by the title).

In MPEG-7, a title is defined with one of metadata descriptors. More specifically, information relating to generating data contents is described with a Creation Description Scheme, in which "Title" describes a title of audio/visual contents, "CreationDescription" describes information relating to what is the contents of data, where, when, why and how the data was created, and who created the data, "Creator" describes an author of the data (an individual, a party or a group etc), "CreationLocation" describes a place where the data was created, "CreationDate" describes the date of creation, and "CreationMaterial" describes an apparatus used for creating the data.

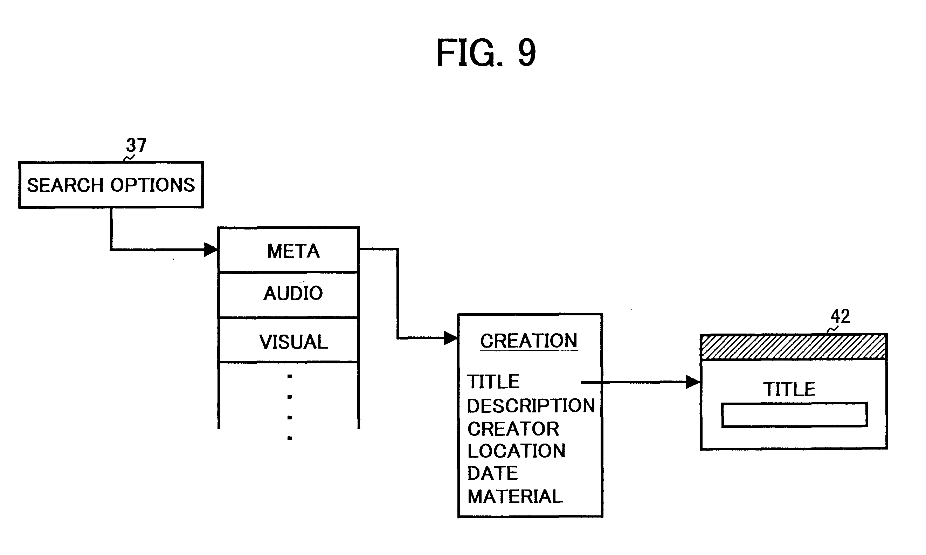

Fig. 9 is a diagram for explaining an operation of setting a title by manipulating the search options button 37.

As illustrated in Fig. 9, by manipulating the search options button 37, a user opens a menu, selects "Meta" (metadata) in the menu, and then selects "Title" in "Creation Description Scheme", to open a title input window 42. The user inputs in the title input window 42 a title such as for example, a whale, to set the title of a retrieval object.

The setting of search options is not limited to "Meta" (metadata). For example, by selecting for example "Visual" in the menu, visual characteristics of a retrieval object can be set or selected. In this example, because the retrieval is based on a sketch image, the default setting can be set so that the retrieval is based on edge characteristics. Other settings can be used as default settings as well.

The tool control 16C5 of the audio/visual style sheet (AVS) 16C defines a drawing tool. That is, the audio/visual style sheet 16C (AVS) is described so that the drawing button 33 corresponding to the tool control 16C5 is linked to a program of the drawing tool. Thereby, for example, in response to a button click of the drawing button 33, the drawing tool program can be executed.

The tool control 16C6 of the audio/visual style sheet (AVS) 16C defines an eraser tool. That is, the audio/visual style sheet 16C (AVS) is described or programmed in such a manner that the eraser button 34 corresponding to the tool control 16C6 is related to an eraser tool program. Thereby, for example, in response to a button click of the eraser button 34, the eraser tool program can be executed.

The above-described tools can be provided locally in a client apparatus and can be described with programming languages such as C, C + +, Java.

Further, designations or instructions with respect to a window tool used for displaying an audio/visual contents description application (AVA) 23C may be included in an audio/visual style sheet (AVS) 16C. For example, when an audio/visual style sheet (AVS) 16C includes the designation or instruction to use a Java tool kit, a browser interprets the designation when constructing an audio/visual contents description application (AVA) 23C, to display the audio/visual contents description application (AVA) 23C using the Java tool kit provided in a client apparatus.

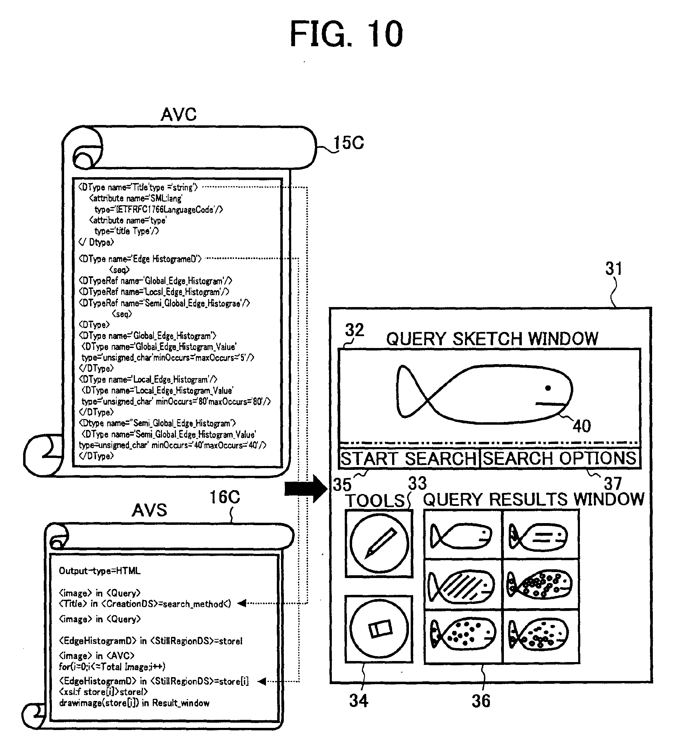

Fig. 10 is a diagram illustrating concrete examples of the audio/visual contents description document (AVC) 15C and the audio/visual style sheet (AVS) 16c.

The audio/visual contents description document (AVC) 15C includes data relating to title and edge descriptors. The audio/visual style sheet (AVS) 16C includes a definition of a process of executing retrieval in accordance with a title specified by a user. Specifically, by executing "search-method", a web server searches for an image under the condition that the title is specified for example as a whale. Further, a process of executing a retrieval using an edge descriptor is defined in the audio/visual style sheet (AVS) 16C. That is, by comparing "EdgeHistogram" of images of the audio/visual contents description document (AVC) 15C and that of a sketch image, a closest image is displayed by "drawimage" in the query results display window ("Result-Window") 36.

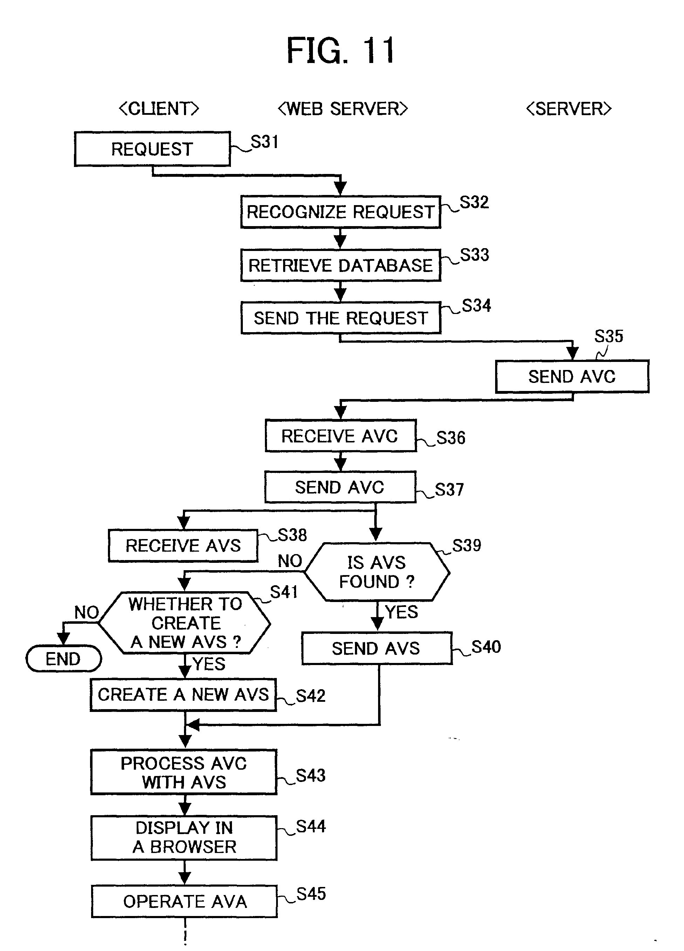

Fig. 11 is a flowchart illustrating another example of an operation of a client server system according to the present invention.

An audio/visual contents description application as illustrated in Fig. 7 may be generated in accordance with the process of Fig. 3 or a process of Fig. 11.

In step S31 of Fig. 11, a user issues a request from the client 12. In step S32, the web server 11 receives and analyzes the request to recognize contents of the request. In step S33, the web server 11 searches for a data base in accordance with the contents of the request. In step S34, the web server 11 sends the request to the data base found in step S33. In step S35, the server 10 receives the request from the web server 11, and then sends a corresponding audio/visual contents description document (AVC) to the web server 11. In step S36, the web server 11 receives the requested audio/visual contents description document (AVC).

In step S37, the web server 11 sends the audio/visual contents description document (AVC) to the client 12. In step S38, the client 12 receives the audio/visual contents description document (AVC). In step S39, the web server 11 searches an audio/visual style sheet (AVS). When an audio/visual style sheet (AVS) according with the contents of the request is found, the process proceeds with step S40. When the audio/visual style sheet (AVS) is not found, the process proceeds with step S41.

In step S40, the web server 11 sends the audio/visual style sheet (AVS) to the client 12. In step S41, the client 12 determines whether a new audio/visual style sheet (AVS) is to be created. For example, the client 12 asks the user whether a new audio/visual style sheet (AVS) is to be created. When it is determined not to create a new audio/visual style sheet (AVS), the process ends. When it is determined to create a new audio/visual style sheet (AVS), the process proceeds to step S42.

In step S42, the user creates or generates a new audio/visual style sheet (AVS) with the client 12. In step S43, the client 12 processes the audio/visual contents description document (AVC) with the audio/visual style sheet (AVS). The result of the processing is obtained in a form of an XML or HTML document.

In step S44, the client 12 displays processed data in a browser, so as to provide to the user an audio/visual contents description application (AVA). In step S45, the user operates the audio/visual contents description application (AVA) displayed in the browser. Thereby, an operation of acquiring a desired audio/visual contents description application (AVA) by sending a request ends.

The process illustrated in Fig. 11 differs from that of Fig. 3 in that an option is available to create a new audio/visual style sheet (AVS) when an appropriate audio/visual style sheet (AVS) is not found and in that the process of applying an audio/visual style sheet (AVS) to an audio/visual contents description document (AVC) is executed at the client 12 instead of the web server 11.

The place and timing to execute necessary processes, such as, in which apparatuses processing of an audio/visual contents description document (ADC) and an audio/visual style sheet (AVS) should be performed, and whether to previously perform the processing for every possible combinations of the audio/visual contents description document (AVC) and the audio/visual style sheet (AVS) or to perform the processing in response to a user request, are not limited to those described above, and can be otherwise than as described above.

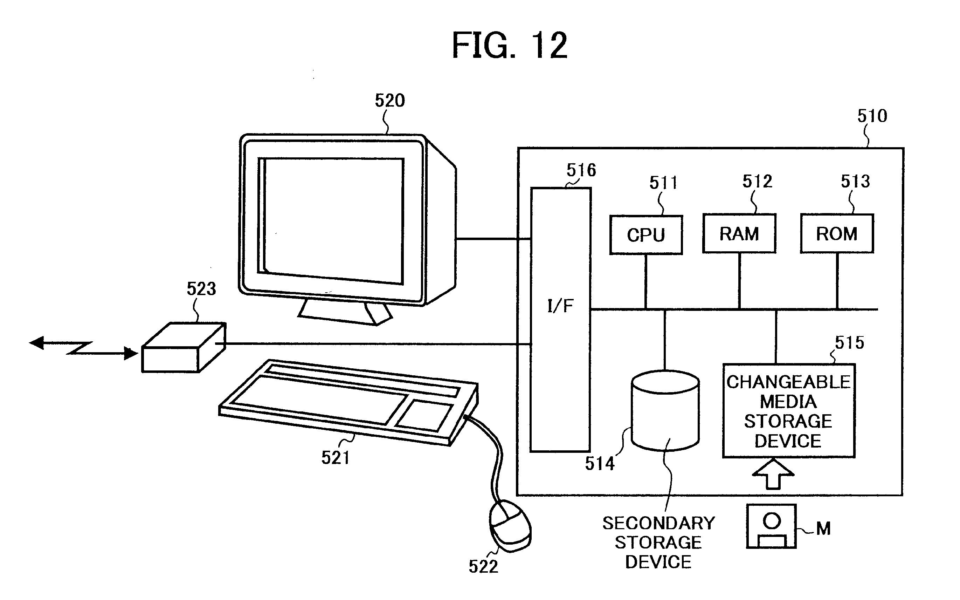

Fig. 12 is a diagram illustrating a construction of an apparatus that executes a process of generating an audio/visual contents description application according to the present invention.

As illustrated in Fig. 12, an apparatus that executes an operation of generating an audio/visual contents description application according to the present invention can be realized by a computer such as a personal computer or an engineering workstation. The apparatus illustrated in Fig. 12 serves as the web server 11 or the client 12 of Fig. 1, and generates an audio/visual contents description application.

The apparatus of Fig. 12 includes a computer 510, a display apparatus 520 connected with the computer 510, a communication apparatus 523, and an input apparatus. The input apparatus includes for example a keyboard 521 and a mouse 522. The computer 510 includes a CPU 511, a RAM 512, a ROM 513, a secondary storage device 514 such as a hard disc, a changeable media storage device 515 and an interface 516.

The keyboard 521 and the mouse 522 provide a user interface and input various kinds of commands for operating the computer 510 and user responses relative to requested data. The display apparatus 520 displays results of processes by the computer 510 and various data for enabling an interaction with a user when the user operates the computer 510. The communication apparatus 523 communicates with a remote place and includes for example a modem and a network interface.

A process for generating an audio/visual contents description application of the present invention can be provided as a computer program that can be executed by the computer 510. The computer program is stored in a storage or computer readable medium M that e.g. can be attached to the changeable media storage device 515, and is loaded from the storage medium M to the RAM 512 or the secondary storage device 514 via the changeable media storage device 515. Alternatively, the computer program can be stored in a remote storage medium (not shown), and is loaded to the RAM 512 or the secondary storage device 514 via the communication apparatus 523 and the interface 516.

When the user inputs a program execution instruction via inputting means, e.g. the keyboard 521 and/or mouse 522, the CPU 511 loads the program from the storage medium M, the remote storage medium or the secondary storage device 514 to the RAM 512. The CPU 511 executes the program loaded to the RAM 512 using a free storage area of the RAM 512 as a work area, and performs processing while interacting with the user as necessary. The ROM 513 stores a control program for controlling a basic operation of the computer 510.

The above-described computer program realizes, as illustrated in Fig. 3 or Fig. 11, a process for retrieving and acquiring an audio/visual contents description document in response to a user request, for retrieving and acquiring or creating an audio/visual style sheet, and for processing the audio/visual contents description document with the audio/visual style sheet, so as to create an audio/visual contents description application. The style sheet processing unit 20 of Fig. 4 is implemented as the above-described computer program.

An audio/visual style sheet is stored in the storage medium or computer readable medium M that can be attached to the changeable storage media device 515 of Fig. 12, and is downloaded from the storage medium M onto the RAM 512 or the secondary storage medium 514 via the changeable storage media device 515. Alternatively, the audio/visual style sheet is stored in a remote storage medium (not shown), and is downloaded from the remote storage medium onto the RAM 512 or the secondary storage medium 514 via the communication apparatus 523 and the interface 516. The audio/visual style sheet may be created by the apparatus of Fig. 12 using the display apparatus 520, the keyboard 521 and the mouse 522 as necessary , so as to be stored in the secondary storage device 514 etc.

As described above, in the present invention, an application for manipulating data of multimedia information is generated according to a style sheet that includes a definition relating to a display format for data of multimedia information and a definition relating to processing of data of multimedia information. Accordingly, contents of the multimedia information and a processing and displaying format for the multimedia information can be separately managed from each other, so that even when it is necessary to change the application, the application can be changed simply by changing the style sheet that defines a processing and displaying format as required without changing a file containing the contents. By thus expanding the concept of a style sheet to displaying and processing of multimedia information, efficient generation of an application of manipulating data of multimedia information is realized, so that efficient management and processing of multimedia information can be realized.

Further, in the present invention, by processing multiple combinations of multimedia information and style sheets in advance, a user request can be quickly responded.

Furthermore, in the present invention, multimedia information and a style sheet can be acquired one by one according to a user request. In this case, multimedia information and a style sheet can be managed while maintaining separation of the multimedia information and the style sheet.

Further, in the present invention, when a style sheet is not found in response to a user request, by creating a new style sheet, accumulation of style sheets can be realized, so that plentiful applications can be accumulated.

Numerous additional modifications and variations of the present invention are possible in light of the above teachings. It is therefore to be understood that within the scope of the appended claims, the present invention may be practiced otherwise than as specifically described herein.

The present application claims priority and contains subject matter related to Japanese Patent Application No. 2000-072685 filed in the Japanese Patent Office on March 15, 2000, and the entire contents of which are hereby incorporated by reference.

## Claims

1. An application generating method, comprising:
a) acquiring multimedia information that includes at least two of video data, audio data, image data and text data and that is described with a language for structuring information;
b) acquiring a style sheet (AVS) that includes a definition relating to a data display format of the multimedia information and a definition relating to data processing of the multimedia information; and
c) generating an application of manipulating data of the multimedia information by processing the multimedia information with the style sheet.

2. The method according to Claim 1,
wherein the steps of a), b) and c) generate a plurality of applications of manipulating data of multimedia information for a plurality of combinations of multimedia information and style sheets,
the method further comprising:
receiving a user request; and
selecting an application in accordance with the user request from the plurality of applications.

3. The method according to Claim 1, further comprising:
receiving a user request,
wherein multimedia information and a style sheet (AVS) in accordance with the user request are acquired in the steps of a) and b), respectively.

4. The method according to Claim 1, the step of b) further including searching for a style sheet (AVS) in accordance with a user request, and generating a new style sheet when the style sheet in accordance with the user request is not found.

5. The method according to Claim 1, further comprising:
displaying the application in a browser used by a user; and
executing the data processing defined by the style sheet (AVS) in accordance with an operation by the user relative to the application.

6. An application generating apparatus, comprising:
a multimedia information acquiring mechanism configured to acquire multimedia information that includes at least two of video data, audio data, image data and text data and that is described with a language for structuring information;
a style sheet acquiring mechanism configured to acquire a style sheet that includes a definition relating to a data display format of the multimedia information and a definition relating to data processing of the multimedia information; and
an application generating mechanism configured to generate an application of manipulating data of the multimedia information by processing the multimedia information with the style sheet.

7. The apparatus according to Claim 6,
the multimedia information acquiring mechanism, the style sheet acquiring mechanism and the application generating mechanism generating a plurality of applications of manipulating data of multimedia information for a plurality of combinations of multimedia information and style sheets,
the apparatus further comprising:
a user request receiving mechanism configured to receive a user request; and
an application selection mechanism configured to select an application in accordance with the user request among from the plurality of applications.

8. The apparatus according to Claim 6, further comprising:
a user request receiving mechanism configured to receive a user request;
wherein the multimedia information acquiring mechanism and the style sheet acquiring mechanism acquire multimedia information and a style sheet according with the user request.

9. The apparatus according to Claim 6, the style sheet acquiring mechanism further including a style sheet searching mechanism configured to search for a style sheet according with a user request, and a new style sheet generating mechanism configured to generate a new style sheet when the style sheet in accordance with the user request is not found.

10. The apparatus according to Claim 6, further comprising:
a displaying mechanism configured to display the application in a browser used by a user; and
a data processing executing mechanism configured to execute the data processing defined by the style sheet in accordance with an operation by the user relative to the application.

11. A system comprising:
a server (10) configured to acquire multimedia information that includes at least two of video data, audio data, image data and text data and that is described with a language for structuring information and a style sheet (AVS) that includes a definition relating to a data display format of the multimedia information and a definition relating to data processing of the multimedia information; and
a client (12) configured to send a request to the server and to display an application of manipulating data of the multimedia information received from the server in accordance with data received from the server in response to the request,
wherein the application is generated by processing the multimedia information with the style sheet.

12. The system according to Claim 11, wherein the server generates the application by processing the multimedia information with the style sheet and sends the application to the client.

13. The system according to Claim 11, wherein the client receives the multimedia information from the server and the style sheet and processes the multimedia information with the style sheet (AVS).

14. The system according to Claim 11, wherein the server receives the multimedia information from a remote server.

15. An information structuring method, comprising:
recording a style sheet (AVS) for multimedia information including at least two of video data, audio data, image data and text data and described with a language for structuring information, the style sheet (AVS) including a definition relating to a data display format of the multimedia information and a definition relating to data processing of the multimedia information.

16. An information structuring apparatus, comprising:
a unit configured to record a style sheet (AVS) for multimedia information including at least two of video data, audio data, image data and text data and described with a language for structuring information, the style sheet (AVS) including a definition relating to a data display format of the multimedia information and a definition relating to data processing of the multimedia information.

17. A computer program product comprising a computer readable medium having thereon computer code means, when said program is loaded, to make the computer execute the steps of:
acquiring multimedia information that includes at least two of video data, audio data, image data and text data and that is described with a language for structuring information;
acquiring a style sheet (AVS) that includes a definition relating to a data display format of the multimedia information and a definition relating to data processing of the multimedia information; and
generating an application of manipulating data of the multimedia information by processing the multimedia information with the style sheet (AVS).

18. A computer program product comprising a computer readable medium having thereon a style sheet (AVS), when said program is loaded to make the computer to generate an application of manipulating data of multimedia information including at least two of video data, audio data, image data and text data and described with a language for structuring information, by executing steps of:
setting a data display format of the multimedia information; and
setting data processing of the multimedia information.

19. An application generating apparatus, comprising:
first means for acquiring multimedia information that includes at least two of video data, audio data, image data and text data and that is described with a language for structuring information;
second means for acquiring a style sheet (AVS) that includes a definition relating to a data display format of the multimedia information and a definition relating to data processing of the multimedia information; and
third means for generating an application of manipulating data of the multimedia information by processing the multimedia information with the style sheet.

20. The apparatus according to Claim 19, wherein
the first, second and third means generate a plurality of applications for a plurality of combinations of multimedia information and style sheets,
the apparatus further comprising:
means for receiving a user request; and
means for selecting an application according with the user request from the plurality of applications.

21. The apparatus according to Claim 19, further comprising:
means for receiving a user request;
wherein the first and second means acquire multimedia information and a style sheet (AVS) in accordance with the user request.

22. The apparatus according to Claim 19, the second means further including means for searching for a style sheet (AVS) in accordance with a user request, and means for generating a new style sheet when the style sheet in accordance with the user request is not found.

23. The apparatus according to Claim 19, further comprising:
means for displaying the application in a browser used by a user; and
means for executing the data processing defined by the style sheet (AVS) in accordance with an operation by the user relative to the application.

24. A system comprising:
means for acquiring multimedia information that includes at least two of video data, audio data, image data and text data and described with a language for structuring information and a style sheet including a definition relating to a data display format of the multimedia information and a definition relating to data processing of the multimedia information; and
means for sending a request to the multimedia information /style sheet acquiring means and for displaying an application of manipulating data of the multimedia information received from the multimedia information/style sheet acquiring means in accordance with data received from the multimedia information/style sheet acquiring means in response to the request,
wherein the application is generated by processing the multimedia information with the style sheet.

25. An information structuring apparatus, comprising:
means for recording a style sheet (AVS) for multimedia information including at least two of video data, audio data, image data and text data and described with a language for structuring information, the style sheet (AVS) including a definition relating to a data display format of the multimedia information and a definition relating to data processing of the multimedia information.
